# EUROPEAN PATENT SPECIFICATION

(11) **EP 3 772 567 B1**
(45) Date of publication and mention of the grant of the patent: **01.06.2022**
(21) Application number: 20193959.2
(22) Date of filing: 14.11.2013
(51) Int. Cl.: F01D 5/14

(54) **GAS TURBINE ENGINE AND CORRESPONDING METHOD OF DESIGNING A FAN BLADE**
GASTURBINENTRIEBWERK UND ZUGEHÖRIGES VERFAHREN ZUR AUSLEGUNG EINER FANSCHAUFEL
MOTEUR À TURBINE ET PROCÉDÉ ASSOCIÉ DE CONCEPTION D'UNE AUBE DE SOUFFLANTE

(30) Priority: 19.11.2012 US 201261727786 P; 30.09.2013 US 201361884295 P
(43) Date of publication of application: 10.02.2021
(62) Divisional of application: 13854460.6
(73) Proprietor: Raytheon Technologies Corporation, Farmington, CT 06032 (US)
(72) Inventor: WORTH, Edwin M., Northville, MI 48168 (US); TILLMAN, Thomas G., West Hartford, CT 06119 (US); SCHWARZ, Frederick M., Glastonbury, CT 06033 (US)
(74) Representative: Dehns

(56) References cited:
- EP-A2- 2 362 066
- US-A- 5 908 285

## Description

The subject-matter of this application is in the technical field of gas turbine engines and methods of designing a fan blade.

### BACKGROUND

Gas turbine engines may be provided with a fan for delivering air to a compressor section and into a bypass section. From the compressor section, the air is compressed and delivered into a combustion section. The combustion section mixes fuel with the air and combusts the combination. Products of the combustion pass downstream over turbine rotors which are driven to rotate and, in turn, drive the compressor and the fan.

Historically, a single turbine rotor may have driven a lower pressure compressor and a fan at the same speed. More recently, a gear reduction has been proposed such as intermediate the lower pressure compressor and the fan, such that the fan can rotate at lower speeds relative to the lower pressure compressor. With this change, the diameter of the fan has increased dramatically and its speed has decreased.

As the fan blade diameter increases, its weight be expected to increase. To address this increase, hollow fan blades have been developed. One type of hollow fan blade has at least one channel and an outer cover attached over a main fan blade body to contain the channel. In addition, an end cap may be placed on the fan body.

The interface of the ends of the end cap and the cover skin, relative to the main fan body, provides an interface that may be in the form of a step.

US 5 908 285 A discloses a prior art gas turbine engine as set forth in the preamble of claim 1.

EP 2 362 066 A2 discloses a prior art hollow fan blade.

### SUMMARY

From a first aspect, the invention provides a gas turbine engine as recited in claim 1.

The invention also provides a method of designing a fan blade as recited in claim 9.

Features of embodiments of the invention are set forth in the dependent claims.

These and other features may be best understood from the following drawings and specification.

### BRIEF DESCRIPTION OF THE DRAWINGS

Figure 1A schematically shows a gas turbine engine.
Figure 1B is a side view of a removed fan blade.
Figure 1C shows the fan blade of Figure 1B in an installed condition.
Figure 2 is a cross-sectional view of the fan blade of Figures 1B, 1C.
Figure 3A is a detail of a location identified by A in Figure 2.
Figure 3BA is a first possibility at an area identified by B in Figure 2.
Figure 3BB shows a second possibility.
Figure 3C shows a possibility at an area identified by C in Figure 2.
Figure 4A shows a corrective method at the location of Figure 3A.
Figure 4BA shows a corrective method at the location of Figure 3BA.
Figure 4BB shows a corrective method at the location of Figure 3BB.
Figure 4C shows a corrective method at the location of Figure 3C.
Figure 5 explains a feature of the fan blade of Figures 1B - 4C.
Figure 6 shows another embodiment.

### DETAILED DESCRIPTION

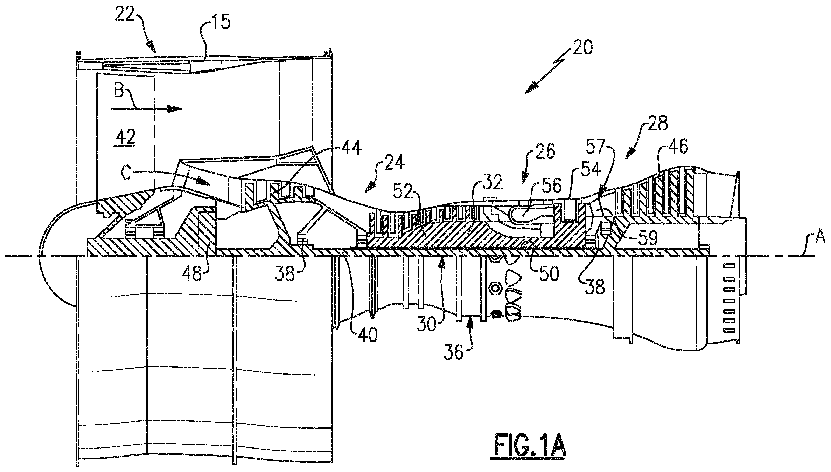

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10.668 km). The flight condition of 0.8 Mach and 35,000 ft (10.668 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/s).

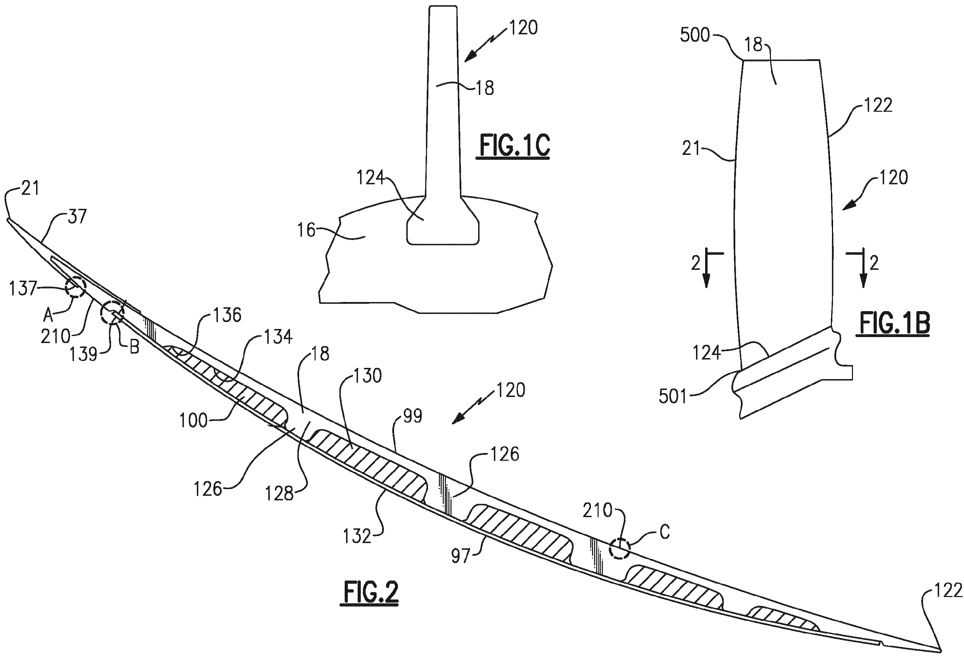

A fan blade 120 which may be utilized in the gas turbine engine 20 is illustrated in Figure 1B having an airfoil 18 extending radially outwardly from a platform 124, which may include, as shown, a dovetail. A leading edge 21 and a trailing edge 122 define the forward and rear limits of the airfoil. As shown in Figure 1B, the airfoil 18 extends from a radially inner end 501 adjacent the platform 124 to a radially outer end 500.

As shown in Figure 1C, a fan rotor 16 will receive the platform 124 to mount the fan blade with the airfoil 18 extending radially outwardly. As the rotor 16 is driven to rotate, it carries the fan blade 120 with it.

Figure 2 shows a cross-section of the fan blade 120 at the airfoil 18. As shown, the leading edge 21 receives a cap 37 secured to a main body 128. A cover 132 closes off cavities or channels 130 in the main body 128. The main body 128, the cap 37 and the cover 132 may all be formed of aluminum or various aluminum alloys. Other materials, such as titanium, titanium alloys or other appropriate metals, may alternatively be utilized for any one or more of the cap 37, the cover 132, and/or the main body 128. Further, other, non-metallic materials, such as composites or plastics, may alternatively and/or additionally be utilized for any one or more of the cap 37, the cover 132, and/or the main body 128.

In addition, while the fan blade 120 is shown having one cover 132 and channels 130 having a closed inner end, it is also possible that the main body 128 would provide a channel extending across its entire thickness with covers at each side. As shown, a plurality of ribs 126 separate the channels 130 in the cross-section illustrated in Figure 2. Filler material 100 may be deposited within the channels 130 and would typically be of a lighter weight than the main body 128.

Applicant has discovered that with the increasing diameter of the fan blade 120 when utilized in geared gas turbine engine, surface smoothness becomes important. If a laminar flow can be achieved at the surface of the airfoil, the fuel burn efficiency and the fan efficiency can be increased dramatically. However, it is challenging to achieve laminar flow on fan blades 120 and, in particular, as their diameter increases and their speed decreases.

In fact, the fan blades mentioned above having a cover 132, or an end cap 37, could be defined as assembled fan blades. These assembled fan blades, applicant has recognized, create steps which could move the actual flow further from laminar than it might be with a solid fan blade.

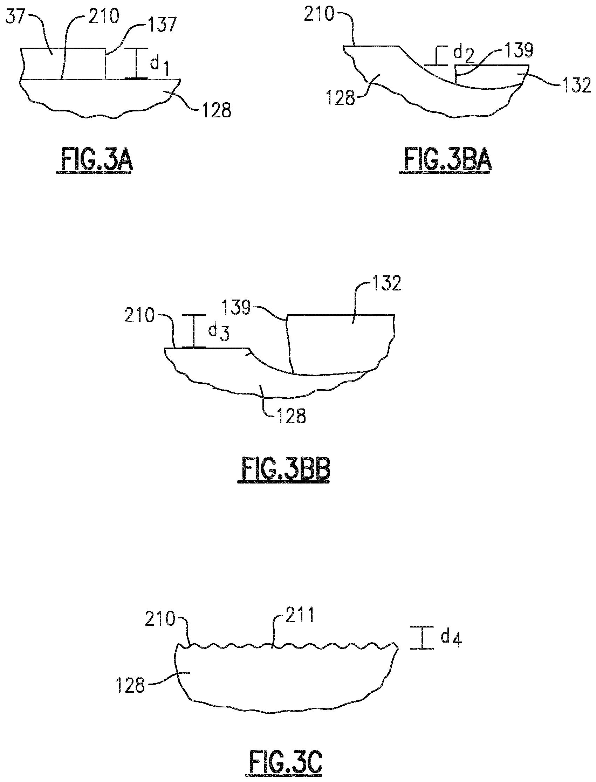

As shown in Figure 3A, an area identified by A in Figure 2 is enlarged. As shown, the cap 37 has an end 137, which is spaced above an outer surface 210 of the main body 128. There is a step of a dimension d₁ between the two.

Similarly, Figure 3BA shows one possibility at the location B in Figure 2. Here, the cover 132 has its end 139 spaced from the outer surface 210 by a step of a dimension d₂. This would be a "negative" step.

Figure 3BB shows the opposite wherein the cover 132 extends above the surface 210 by a dimension d₃. This might be called a positive step.

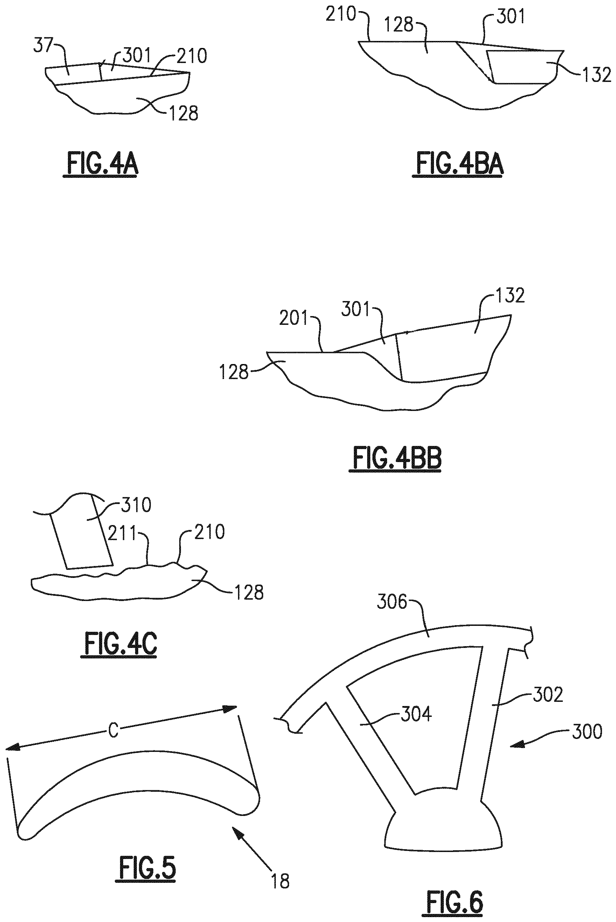

Applicant has discovered that these steps must be minimized to achieve laminar flow. In particular, the steps should be less than or equal to about 0.010 inch (0.0254 centimeter). This requirement can be performed as part of a quality control step and, if any of the dimensions d₁ - d₃ are outside of this dimension, then corrective steps may be taken. As an example, as shown in Figure 4A, 4BB and 4BA, a putty 301 may be included to take up the step and reduce the sudden change between the two surfaces.

Stated another way, a chord length C for the blade airfoils 18 may be defined as shown in Figure 5. In one embodiment, rather than the 0.010 inch (0.0254 centimeter) maximum, the dimensions d₁ - d₃ could be defined as being kept within a maximum ratio with regard to the chord length C. In one embodiment, the maximum allowable step was 0.010 inch (0.0254 centimeter), and the chord length C was 10 inches (25.4 centimeters).

According to the invention, a ratio of d₁ - d₃ to C is less than or equal to about 0.001. For this embodiment, C is measured at a tip of the airfoil 18, and between its leading and trailing edges.

As mentioned above, the reduction of the steps may be provided on each of the suction side 97 and pressure side 99 (see Figure 2) of the airfoil at all positions wherein there is a step. In addition, the corrective measure may be more important at different radial locations between the radial ends 500 and 501 of the airfoil 18 (see Figure 1B).

For purposes of measuring the step height after the corrective steps of Figures 4A, 4BA, and 4BB, the putty 301 is considered part of the cover 132 or end cap 37. While putty is disclosed, other filler materials may be used.

Figure 3C shows yet another concern. A surface roughness at the surface 210 may be identified as surface irregularities 211 and may have a highest dimension d₄. It would be desirable that this surface roughness be minimized. Applicant has found that maintaining a surface roughness with a root means square value of less than about 60 × 10⁻⁶⁻inch (1.524 µm) would result in a fan blade providing more laminar flow.

As shown in Figure 4C, this may be achieved by machining such as applying a polishing or smoothing tool 310 to the irregularities 211.

Applicant has also discovered that the most important portion of the fan blade to have the required smoothness are from about 20% of the blade span radially outwardly, measured along a length of airfoil 18 to 100% of the airfoil 18, at its tip.

In addition, applicant has determined that the results achieved by a fan blade having the disclosed characteristics are most beneficial when a fan tip corrected speed is below about 1225 ft/second (373.4 m/s) at bucket cruise, and even more beneficial when the fan speed is below 1150 ft/second (350.5 m/s). Further, the benefits are more pronounced when the fan rotor carries 26 or fewer fan blades.

Now, an assembled fan blade having either the small step size or the very smooth outer surface will achieve laminar flow over a greater percentage of its surface area. These treatments can be applied at any radial location between ends 501 and 500 or over all of those portions. In addition, they may be provided on only the suction side 97, only the pressure side 99 or both.

Figure 6 shows an alternate embodiment fan rotor 300 wherein blades 302 and 304 have a shroud 306 extending between them. The shroud 306 provides additional rigidity to the structure to enhance laminar flow across the fan blades 302, 304. The shroud of this embodiment may be used in conjunction with any of the foregoing surface treatments described with respect to the embodiments of Figures 2-5.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine (20) comprising:
a fan drive turbine (46) driving a fan rotor (16; 300) having at least one blade (120) through a gear reduction (48), said at least one blade (120) including a main body (128) having an airfoil (18) extending between a leading edge (21) and a trailing edge (122), and said at least one blade (120; 302, 304) having a chord length and at least one of:
(a) a cover (132) closing a channel (130); and
(b) an end cap (37) covering at least one of the leading and trailing edges (21, 122),
the at least one of a cover (132) and an end cap (37) having a pair of opposed ends (137, 139), and a step defined extending from at least one of a suction wall (97) and a pressure wall (99) of the airfoil (18), to an outer surface of said one of a cover (132) and an end cap (37) at one of said opposed ends (137, 139),
**characterised in that**
a ratio of a dimension (d₁; d₂; d₃) of said step to said chord length (C) is less than or equal to about 0.001.

2. The gas turbine engine (20) as set forth in claim 1, wherein said main body (128) includes both said cover (132) and said end cap (37), wherein the end cap (37) is at said leading edge (21).

3. The gas turbine engine (20) as set forth in claim 2, wherein a filler material (100) is provided between each of said opposed ends (137, 139) of said at least one of a cover (132) and an end cap (37) and said main body (128), with said filler material (100) reducing said dimension (d₁; d₂; d₃) of said step, and said filler material (100) being part of said at least one of a cover (132) and an end cap (37).

4. The gas turbine engine (20) as set forth in any of claims 1 to 3, wherein an outer surface of said blade (120; 302, 304) has a surface roughness and said surface roughness has a root means square value of less than about 60 × 10⁻⁶ inch (1.524 × 10⁻⁶ m) on at least a portion of a radial length of the outer surface (210) of the main body (128).

5. The gas turbine engine (20) as set forth in claim 1, wherein a filler material (100) is provided between an end (137, 139) of said at least one of a cover (132) and an end cap (37) and said main body (128), with said filler material (100) reducing the dimension (d₁; d₂; d₃) of said step, and said filler material (100) being part of said at least one of a cover (132) and an end cap (37).

6. The gas turbine engine (20) as set forth in any preceding claim, wherein said step occurs over a portion of said blade (120; 302, 304) beginning from at least 20% of a blade span, measured from a platform (124) to a radially outer tip of said airfoil (18).

7. The gas turbine engine (20) as set forth in any preceding claim, wherein said blade (120) is designed to rotate with a fan tip corrected speed below 1225 ft/second (373 meters/second) at bucket cruise.

8. The gas turbine engine (20) as set forth in any preceding claim, comprising a shroud (306) connecting adjacent ones of said at least one blade (120; 302, 304).

9. A method of designing a fan blade (120; 302; 304) comprising:
providing a main body (128) having an airfoil (18) extending between a leading edge (21) and a trailing edge (122), and the fan blade (120; 302; 304) having a chord length (C), the airfoil (18) extending radially outwardly from a platform (124), and the fan blade (120; 302; 304) having at least one of:
(a) a cover (132) closing a channel (130); and
(b) an end cap (37) covering at least one of the leading and trailing edges (21, 122); and
the at least one of a cover (132) and an end cap (37) having a pair of opposed ends (137, 139), and a step defined extending from at least one of a suction wall (97) and a pressure wall (99) of the airfoil (18) to an outer surface of said one of a cover (132) and an end cap (37) at one of said opposed ends (137, 139),
**characterised in that**
a ratio of a dimension (d₁; d₂; d₃) of said step to said chord length (C) is less than or equal to about 0.001.

10. The method as set forth in claim 9, wherein an outer surface of said fan blade (120) has a surface roughness and said surface roughness has a root means square value of less than about 60 × 10⁻⁶ inch (1.524 × 10⁻⁶ m) on at least a portion of a radial length of the outer surface (210) of the main body (128).

## Patentansprüche

1. Gasturbinentriebwerk (20), umfassend:
eine Fanantriebsturbine (46), die einen Fanrotor (16; 300) mit mindestens einer Schaufel (120) durch eine Untersetzung (48) antreibt, wobei die mindestens eine Schaufel (120) einen Hauptkörper (128) mit einem Strömungsprofil (18) beinhaltet, das sich zwischen einer Vorderkante (21) und einer Hinterkante (122) erstreckt, und die mindestens eine Schaufel (120; 302, 304) eine Sehnenlänge und mindestens eine von Folgenden aufweist:
(a) eine Abdeckung (132), die einen Kanal (130) verschließt; und
(b) eine Endkappe (37), die mindestens eine von der Vorderkante und der Hinterkante (21, 122) bedeckt,
wobei die mindestens eine von einer Abdeckung (132) und einer Endkappe (37) ein Paar gegenüberliegender Enden (137, 139) und eine definierte Stufe aufweisen, die sich von mindestens einer von einer Saugwand (97) und einer Druckwand (99) des Strömungsprofils (18) zu einer äußeren Oberfläche der einen von einer Abdeckung (132) und einer Endkappe (37) an einem der gegenüberliegenden Enden (137, 139) erstreckt,
**dadurch gekennzeichnet, dass**
ein Verhältnis einer Abmessung (d₁; d₂; d₃) der Stufe zu der Sehnenlänge (C) kleiner oder gleich etwa 0,001 ist.

2. Gasturbinentriebwerk (20) nach Anspruch 1, wobei der Hauptkörper (128) sowohl die Abdeckung (132) als auch die Endkappe (37) beinhaltet, wobei sich die Endkappe (37) an der Vorderkante (21) befindet.

3. Gasturbinentriebwerk (20) nach Anspruch 2, wobei ein Füllmaterial (100) zwischen jedem der gegenüberliegenden Enden (137, 139) der mindestens einen von einer Abdeckung (132) und einer Endkappe (37) und dem Hauptkörper (128) bereitgestellt ist, wobei das Füllmaterial (100) die Abmessung (d₁; d₂; d₃) der Stufe verringert und das Füllmaterial (100) Teil der mindestens einen von einer Abdeckung (132) und einer Endkappe (37) ist.

4. Gasturbinentriebwerk (20) nach einem der Ansprüche 1 bis 3, wobei eine äußere Oberfläche der Schaufel (120; 302, 304) eine Oberflächenrauhigkeit aufweist und die Oberflächenrauhigkeit einen quadratischen Mittelwert von weniger als etwa 60 × 10⁻⁶ Zoll (1,524 × 10⁻⁶ m) auf mindestens einem Abschnitt einer radialen Länge der äußeren Oberfläche (210) des Hauptkörpers (128) aufweist.

5. Gasturbinentriebwerk (20) nach Anspruch 1, wobei ein Füllmaterial (100) zwischen einem Ende (137, 139) der mindestens einen von einer Abdeckung (132) und einer Endkappe (37) und dem Hauptkörper (128) bereitgestellt ist, wobei das Füllmaterial (100) die Abmessung (d₁; d₂; d₃) der Stufe verringert und das Füllmaterial (100) Teil der mindestens einen von einer Abdeckung (132) und einer Endkappe (37) ist.

6. Gasturbinentriebwerk (20) nach einem der vorhergehenden Ansprüche, wobei die Stufe über einem Abschnitt der Schaufel (120; 302, 304) auftritt, der bei mindestens 20 % einer Schaufelspannweite beginnt, die von einer Plattform (124) zu einer radial äußeren Spitze des Strömungsprofils (18) gemessen wird.

7. Gasturbinentriebwerk (20) nach einem der vorhergehenden Ansprüche, wobei die Schaufel (120) so ausgelegt ist, dass sie sich mit einer korrigierten Fanspitzendrehzahl unter 1225 Fuß/Sekunde (373 Meter/Sekunde) bei Bucket Cruise dreht.

8. Gasturbinentriebwerk (20) nach einem der vorhergehenden Ansprüche, das ein Deckband (306) umfasst, das benachbarte eine der mindestens einen Schaufel (120; 302, 304) verbindet.

9. Verfahren zum Auslegen einer Fanschaufel (120; 302; 304), umfassend:
Bereitstellen eines Hauptkörpers (128) mit einem Strömungsprofil (18), das sich zwischen einer Vorderkante (21) und einer Hinterkante (122) erstreckt, und der Fanschaufel (120; 302; 304) mit einer Sehnenlänge (C), wobei sich das Strömungsprofil (18) von einer Plattform (124) radial nach außen erstreckt und die Fanschaufel (120; 302; 304) mindestens eine von Folgenden aufweist:
(a) eine Abdeckung (132), die einen Kanal (130) verschließt; und
(b) eine Endkappe (37), die mindestens eine von der Vorderkante und der Hinterkante (21, 122) bedeckt; und
wobei die mindestens eine von einer Abdeckung (132) und einer Endkappe (37) ein Paar gegenüberliegender Enden (137, 139) und eine definierte Stufe aufweisen, die sich von mindestens einer von einer Saugwand (97) und einer Druckwand (99) des Strömungsprofils (18) zu einer äußeren Oberfläche der einen von einer Abdeckung (132) und einer Endkappe (37) an einem der gegenüberliegenden Enden (137, 139) erstreckt,
**dadurch gekennzeichnet, dass**
ein Verhältnis einer Abmessung (d₁; d₂; d₃) der Stufe zu der Sehnenlänge (C) kleiner oder gleich etwa 0,001 ist.

10. Verfahren nach Anspruch 9, wobei eine äußere Oberfläche der Fanschaufel (120) eine Oberflächenrauhigkeit aufweist und die Oberflächenrauhigkeit einen quadratischen Mittelwert von weniger als etwa 60 × 10⁻⁶ Zoll (1,524 × 10⁻⁶ m) auf mindestens einem Abschnitt einer radialen Länge der äußeren Oberfläche (210) des Hauptkörpers (128) aufweist.

## Revendications

1. Moteur à turbine à gaz (20) comprenant :
une turbine d'entraînement de soufflante (46) entraînant un rotor de soufflante (16 ; 300) ayant au moins une aube (120) par l'intermédiaire d'un démultiplicateur (48), ladite au moins une aube (120) comportant un corps principal (128) ayant un profil aérodynamique (18) s'étendant entre un bord d'attaque (21) et un bord de fuite (122), et ladite au moins une aube (120 ; 302, 304) ayant une longueur de corde et au moins l'un parmi :
(a) un couvercle (132) fermant un canal (130) ; et
(b) un capuchon d'extrémité (37) recouvrant au moins l'un des bords d'attaque et de fuite (21, 122),
l'au moins un parmi un couvercle (132) et un capuchon d'extrémité (37) ayant une paire d'extrémités opposées (137, 139), et un gradin défini s'étendant depuis au moins l'un parmi un extrados (97) et un intrados (99) du profil aérodynamique (18), vers une surface extérieure dudit un parmi un couvercle (132) et un capuchon d'extrémité (37) au niveau de l'une desdites extrémités opposées (137, 139),
**caractérisé en ce que**
un rapport d'une dimension (d₁; d₂; d₃) dudit gradin à ladite longueur de corde (C) est inférieur ou égal à environ 0,001.

2. Moteur à turbine à gaz (20) selon la revendication 1, dans lequel ledit corps principal (128) comporte à la fois ledit couvercle (132) et ledit capuchon d'extrémité (37), dans lequel le capuchon d'extrémité (37) est au niveau dudit bord d'attaque (21) .

3. Moteur à turbine à gaz (20) selon la revendication 2, dans lequel un matériau de remplissage (100) est disposé entre chacune desdites extrémités opposées (137, 139) dudit au moins un parmi un couvercle (132) et un capuchon d'extrémité (37) et ledit corps principal (128), avec ledit matériau de remplissage (100) réduisant ladite dimension (d₁; d₂; d₃) dudit gradin, et ledit matériau de remplissage (100) faisant partie dudit au moins un parmi un couvercle (132) et un capuchon d'extrémité (37) .

4. Moteur à turbine à gaz (20) selon l'une quelconque des revendications 1 à 3, dans lequel une surface extérieure de ladite aube (120 ; 302, 304) a une rugosité de surface et ladite rugosité de surface a une valeur quadratique moyenne inférieure à environ 60 × 10⁻⁶ pouces (1,524 × 10⁻⁶ m) sur au moins une partie d'une longueur radiale de la surface extérieure (210) du corps principal (128).

5. Moteur à turbine à gaz (20) selon la revendication 1, dans lequel un matériau de remplissage (100) est disposé entre une extrémité (137, 139) dudit au moins un parmi un couvercle (132) et un capuchon d'extrémité (37) et ledit corps principal (128), avec ledit matériau de remplissage (100) réduisant la dimension (d₁; d₂ ; d₃) dudit gradin, et ledit matériau de remplissage (100) faisant partie dudit au moins un parmi un couvercle (132) et un capuchon d'extrémité (37).

6. Moteur à turbine à gaz (20) selon une quelconque revendication précédente, dans lequel ledit gradin est présent sur une partie de ladite aube (120 ; 302, 304) commençant à au moins 20 % d'une envergure d'aube, mesurée depuis d'une plate-forme (124) vers une pointe radialement extérieure dudit profil aérodynamique (18).

7. Moteur à turbine à gaz (20) selon une quelconque revendication précédente, dans lequel ladite aube (120) est conçue pour tourner à une vitesse corrigée de pointe de soufflante inférieure à 1 225 pieds/seconde (373 mètres/seconde) à une vitesse de croisière d'ailette.

8. Moteur à turbine à gaz (20) selon une quelconque revendication précédente, comprenant un carénage (306) reliant des aubes adjacentes de ladite au moins une aube (120 ; 302, 304) .

9. Procédé de conception d'une aube de soufflante (120 ; 302 ; 304) comprenant :
la fourniture d'un corps principal (128) ayant un profil aérodynamique (18) s'étendant entre un bord d'attaque (21) et un bord de fuite (122), et l'aube de soufflante (120 ; 302 ; 304) ayant une longueur de corde (C), le profil aérodynamique (18) s'étendant radialement vers l'extérieur depuis une plate-forme (124), et l'aube de soufflante (120 ; 302 ; 304) ayant au moins l'un parmi :
(a) un couvercle (132) fermant un canal (130) ; et
(b) un capuchon d'extrémité (37) recouvrant au moins l'un des bords d'attaque et de fuite (21, 122) ; et
l'au moins un parmi un couvercle (132) et un capuchon d'extrémité (37) ayant une paire d'extrémités opposées (137, 139), et un gradin défini s'étendant depuis au moins l'un parmi un extrados (97) et un intrados (99) du profil aérodynamique (18) vers une surface extérieure dudit un parmi un couvercle (132) et un capuchon d'extrémité (37) au niveau de l'une desdites extrémités opposées (137, 139),
**caractérisé en ce que**
un rapport d'une dimension (d₁; d₂ ; d₃) dudit gradin à ladite longueur de corde (C) est inférieur ou égal à environ 0,001.

10. Procédé selon la revendication 9, dans lequel une surface extérieure de ladite aube de soufflante (120) a une rugosité de surface et ladite rugosité de surface a une valeur quadratique moyenne inférieure à environ 60 × 10⁻⁶ pouces (1,524 × 10⁻⁶ m) sur au moins une partie d'une longueur radiale de la surface extérieure (210) du corps principal (128).
